# DEMANDE DE BREVET EUROPEEN

(11) **EP 1 839 505 A1**
(43) Date de publication de la demande: **03.10.2007**
(21) Numéro de dépôt: 07300787.4
(22) Date de dépôt: 12.02.2007
(51) Int. Cl.: A23N 12/02, A23B 7/157, A23B 7/158, A23B 7/153, A23B 7/005

(54) **Procédé et installation de traitement de produits en morceaux tels que des salades ou des légumes découpées en vue de leur conditionnement**

(30) Priorité: 29.03.2006 FR 0651080
(71) Demandeur: FLORETTE, 50430 Lessay (FR)
(72) Inventeur: Osmond, Sébastien, 50200, Coutances (FR); Savary, Laurent, 50430, Angoville sur Ay (FR)
(74) Mandataire: Herrburger, Pierre

(57) **Abrégé**

Procédé et installation de traitement de produits végétaux en morceaux tels que des salades en vue de leur conditionnement et de leur conservation.

L'installation comprend une chambre de traitement (1) à l'eau désinfectée, un circuit de préparation (2) de l'eau désinfectée et un circuit de commande (7). La chambre de traitement (1) est formée par un caisson, dont l'un des côtés est une trappe d'évacuation (13) et le dessus est occupé par une grille (14) ; l'entrée (15) des produits à traiter se faisant par le haut et la sortie des produits traités se faisant par la trappe d'évacuation (13), une arrivée d'eau du circuit (2) passant par l'entrée des produits (3). Le circuit de préparation d'eau (2) traversant la chambre de traitement (1) en reliant son entrée (13) à sa sortie, comporte une pompe de circulation (22), un filtre (24), un dispositif de mise en température de l'eau (25) et un dispositif de traitement physique de désinfection de l'eau (27). Le circuit de commande (7) assure le fonctionnement séquentiel du traitement des lots de produits en commandant la fermeture de la trappe de sortie (13) de la chambre (1), le chargement (4) d'un lot, l'ouverture de la chambre (1) et l'évacuation du lot ainsi que la commande du dispositif de mise en température (25) de l'eau en circulation et du dispositif de traitement physique de désinfection de l'eau (27).

## Description

### Domaine de l'invention

La présente invention concerne un procédé et une installation de traitement de produits en morceaux tels que des salades ou des légumes découpés en vue de leur conditionnement pour la vente, selon lesquels
- on lave d'abord les produits pour en éliminer mécaniquement les éléments allogènes solides, tels que sable, petits morceaux de végétaux, pierres, insectes, chenilles ou escargots puis,
- on soumet les produits ainsi lavés à un traitement de conservation

### Etat de la technique

Il est connu de distribuer des produits tels que des salades nettoyées et coupées en morceaux. Ces salades sont conditionnées en sachets et vendues telles quelles. L'acheteur peut alors prendre la salade et l'assaisonner sans avoir à se charger de tous les travaux de découpe, de nettoyage et de rinçage de la salade. Cela permet également une plus grande diversité de la présentation des salades, des mélanges de salades, des quantités moins importantes qu'une ou plusieurs têtes de salade et une conservation meilleure qu'une moitié de tête de salade placée dans un bac à légumes de réfrigérateur.

Mais certains procédés actuels de traitement des salades utilisent des traitements par voie liquide avec des additifs chimiques pour conserver l'aspect des morceaux de salade, éviter que les coupes prennent une couleur rose ou que par déshydratation, les morceaux ne flétrissent et se détériorent.

Comme auxiliaire à l'eau, on utilise généralement du chlore.

Mais la tendance actuelle pour de multiples raisons, consiste à éviter de traiter autant que possible les produits alimentaires avec des agents chimiques, même à faible dose.

### But de l'invention

La présente invention a pour but de développer un procédé et une installation de traitement de produits en morceaux tels que des salades permettant d'éviter l'utilisation d'agents chimiques pour leur traitement et leur conservation tout en évitant toute dégradation des produits ainsi traités pendant la durée de conservation et en évitant de créer des rejets industriels nécessitant des traitements particuliers à cause des additifs qu'ils contiendraient.

### Exposé et avantages de l'invention

A cet effet, l'invention concerne un procédé de traitement du type défini ci-dessus caractérisé en ce qu'
- on soumet les produits à un contact dans un bain, d'eau désinfectée que l'on fait circuler entre l'entrée et la sortie du bain,
- avant d'appliquer l'eau désinfectée aux produits, on la filtre, on la met à la température de traitement puis, on la soumet à un traitement physique pour la désinfecter puis, et on la projette sur les produits.

L'invention concerne également une installation de traitement de produits en morceaux tels que des morceaux de végétaux, notamment des morceaux de salade, caractérisée en ce qu'elle comprend
- une chambre de traitement à l'eau désinfectée,
- un circuit de préparation de l'eau désinfectée et
- un circuit de commande,

A- la chambre de traitement est formée par un caisson, dont l'un des côtés est une trappe d'évacuation et le dessus est occupé par une grille,
   - l'entrée des produits à traiter se faisant par le haut et la sortie des produits traités se faisant par la trappe d'évacuation,
   - une arrivée d'eau du circuit passant par l'entrée des produits,
B- le circuit de préparation d'eau traversant la chambre de traitement en reliant son entrée à sa sortie, comporte dans l'ordre
   - une pompe de circulation,
   - un filtre,
   - un dispositif de mise en température de l'eau, puis
   - un dispositif de traitement physique de désinfection de l'eau,
C- le circuit de commande assure le fonctionnement séquentiel du traitement des lots de produits en commandant la fermeture de la trappe de sortie de la chambre, le chargement d'un lot, l'ouverture de la chambre et l'évacuation du lot ainsi que la commande du dispositif de mise en température de l'eau en circulation et du dispositif de traitement physique de désinfection de l'eau.

Le procédé et l'installation selon l'invention permettent de traiter de manière très efficace des produits tels que des salades en vue de leur conditionnement en sachet pour une conservation de courte durée avant leur consommation sans risque de résidus de produits chimiques sur les aliments ainsi conditionnés.

L'application du procédé est particulièrement efficace pour conserver les qualités d'aspect ; en outre, ce traitement et la période de conservation consécutive ne détériorent pas les qualités des produits et en particulier leur fraîcheur et leurs caractéristiques organoleptiques. Les produits ne prennent aucun goût particulier et conservent intact leur goût propre.

L'élimination des germes et la cicatrisation des tranches coupées des produits par le traitement avec de l'eau désinfectée, ne contenant aucun additif chimique mais seulement mise à la température de traitement, constitue un moyen efficace non seulement pour les produits mais également pour le respect de l'environnement en évitant le rejet d'eaux chargées de produits chimiques ou la nécessiter de traiter de telles eaux chargées avant leur rejet.

D'ailleurs, selon l'invention, l'eau travaillant en circuit fermé, la seule perte d'eau est celle entraînée par les produits et qui est remplacée par un ajout d'eau complétant le circuit. Mais cette eau en circulation est toujours traitée en circuit de sorte que les seuls rejets sont les produits retenus pas le filtre.

Le procédé selon l'invention a également l'avantage d'être efficace et rapide.

Selon une caractéristique avantageuse, on traite physiquement l'eau pour la désinfecter en la soumettant à un rayonnement ultraviolet ou à de l'ozone. Le rayonnement ultraviolet est appliqué dans une chambre traversée par l'eau et comportant une source de rayonnement ultraviolet. Dans le cas d'un traitement physique de désinfection par de l'ozone, on injecte l'ozone dans l'eau. Dans les deux cas, le traitement physique se fait en aval de la mise en température de manière à ce que le moment où est effectuée la désinfection physique de l'eau se situe aussi près que possible du moment d'utilisation de l'eau, c'est-à-dire du passage de l'eau dans la chambre contenant un lot de produits à traiter.

Suivant la nature des produits traités, l'eau mise en circulation est à une température de traitement de quelques degrés, de l'ordre de 2°C, pour des produits coupés mais ne risquant pas de rosir tels que la mâche, alors que pour des produits coupés risquant de rosir comme la laitue, la chicorée et la scarole, on applique un choc thermique aux produits avec de l'eau à une température de l'ordre de 45°C.

Dans le cas d'une mise en température de l'eau pour appliquer un choc thermique, il faut ensuite refroidir les produits en vue de leur conditionnement et, dans ce cas, l'opération de traitement est suivie par un second traitement effectué dans les conditions strictement identiques et dans une installation identique sauf que l'eau au lieu d'être mise à la température de consigne de l'ordre de 45°C, est mise à une température voisine ou égale à la température finale utilisée pour la conservation, c'est-à-dire environ 2°C.

Ce second traitement fait après le premier traitement avec de l'eau réchauffée, utilise également de l'eau désinfectée, préparée comme cela a été précisé ci-dessus.

Le traitement physique par une irradiation aux rayons ultraviolets ou par de l'ozone ne laisse aucune trace dans l'eau en aval de cette étape de traitement.

Pour garantir l'efficacité du traitement, c'est-à-dire l'efficacité du contact entre l'eau désinfectée, il est avantageux de traiter les produits par lots et de soumettre chaque lot à un séjour de durée déterminée dans le bain pendant que l'on maintient la circulation d'eau qui est toujours renouvelée et est à la température de traitement.

L'installation selon l'invention est réalisée avantageusement avec une trappe d'entrée fermant la chambre après introduction d'un lot de produits pour retenir les produits dans la chambre pendant la phase de contact.

Suivant une autre caractéristique avantageuse, elle comporte un point d'entrée des produits, séparé de la chambre de traitement par la trappe d'entrée, ainsi qu'un injecteur d'eau entraînant les produits du point d'entrée vers la chambre de traitement et alimentant celle-ci en eau.

Suivant une autre caractéristique avantageuse, la grille fermant le dessus de la chambre est en dessous du bord du caisson formant la chambre pour que, pendant la phase de contact, la grille soit sous le niveau d'eau lorsque la chambre de traitement est fermée, pour maintenir les produits sous le niveau d'eau pendant la phase.

Suivant une autre caractéristique avantageuse, le caisson est en forme de goulotte et le point d'entrée des produits est une goulotte débouchant dans le haut du caisson et comportant un injecteur pour l'alimentation en eau désinfectée. Le caisson se prolonge au-delà de la chambre pour arriver sur un convoyeur perméable constituant la sortie des produits. Un bac tampon est installé sous la sortie du caisson et récupère l'eau pour la recycler par le circuit.

Suivant une autre caractéristique avantageuse, le circuit de commande assure la commande cyclique du traitement d'un lot pour un temps de séjour du lot dans la chambre de traitement qui correspond au moins au passage de la quantité totale de l'eau du circuit dans la chambre de traitement.

Suivant une autre caractéristique avantageuse, la pompe de circulation fonctionne en continu.

L'installation pour la mise en oeuvre du procédé se réalise d'une manière particulièrement simple et efficace. Le fonctionnement de l'installation est, de préférence, séquentiel puisque le traitement des produits se fait par lots bien que l'eau désinfectée soit maintenue en permanence en circulation de sorte qu'elle est traitée en permanence, c'est-à-dire filtrée et désinfectée par un traitement physique par irradiation par les rayons U.V. ou par injection d'ozone.

### Dessins

La présente invention sera décrite ci-après de manière plus détaillée à l'aide des dessins annexés montrant une installation de traitement et différentes étapes de fonctionnement de l'installation, à savoir :
- la figure 1 est un schéma du procédé de l'invention,
- les figures 2A, 2B représentent une vue schématique d'une installation de traitement de lots de produits en morceaux, tels que des morceaux de salade, en phase d'évacuation de la chambre de traitement (figure 2A) et en phase de traitement par contact avec l'eau désinfectée (figure 2B),
- les figures 3-1 à 3-6 montrent six étapes du procédé de traitement de produits tels que des morceaux de salade à l'aide de l'installation des figures 2A, 2B,
- la figure 4 est une vue en perspective d'un mode de réalisation de l'installation de traitement selon l'invention.

### Description de modes de réalisation de l'invention

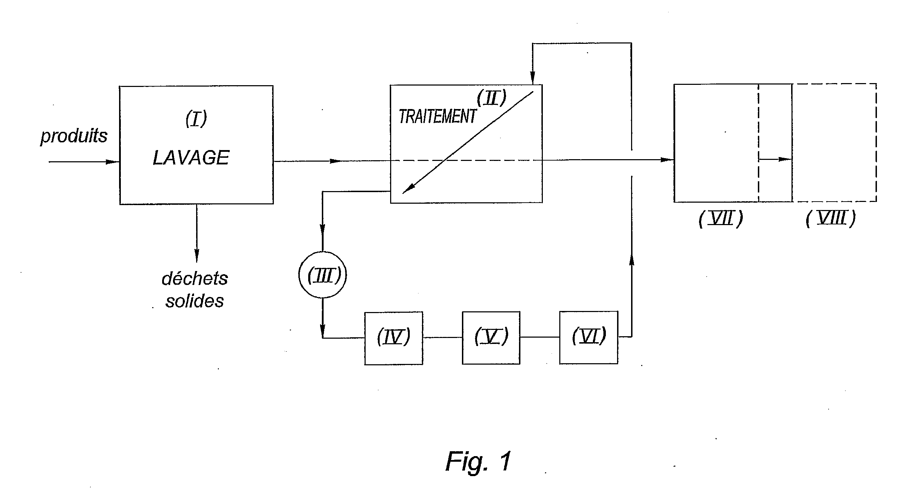

Selon la figure 1, l'invention concerne un procédé de traitement de produits végétaux en morceaux tels que des salades ou des légumes coupés en vue de leur conditionnement en sachets et de leur conservation pendant une durée limitée, comme denrées fraîches, ce procédé de traitement s'intégrant dans le procédé général de préparation et de conditionnement de tels produits.

Dans une première étape (I), les produits coupés sont soumis à un lavage pour en éliminer mécaniquement les éléments étrangers, solides tels que le sable, les pierres, les insectes, chenilles ou escargots et éventuellement certains morceaux de végétaux qui ont échappé au nettoyage initial des produits. Puis, on soumet les produits ainsi lavés à un traitement de conservation (II) dans un bain d'eau désinfectée sans additifs chimiques. Ce bain est agité et les produits sont maintenus sous le niveau du bain pour qu'ils soient parfaitement en contact avec l'eau du bain. On fait circuler (III) cette eau entre l'entrée et la sortie du bain (II) et on la récupère en sortie pour la filtrer (IV), on la met à la température (V) nécessaire au traitement puis, on désinfecte l'eau (VI) par un procédé de traitement physique par irradiation aux rayons ultraviolets ou par injection d'ozone. L'eau ainsi désinfectée est renvoyée dans le bain.

Le contact avec de l'eau désinfectée mise à la température permet de neutraliser les agents d'altération des produits. Ensuite, les produits sont évacués du bain pour être refroidis (VII) et conditionnés (VIII). Dans l'hypothèse où les produits doivent subir un choc thermique pour ne pas rosir, le bain est mis à une température supérieure à la température de conservation par exemple d'environ 45°C.

Ensuite, il faut refroidir les produits pour les mettre à la température de conservation. Ce refroidissement (VII) se fait dans une installation analogue à celle qui vient d'être décrite : les produits sont mis dans un bain agité pour venir en contact avec de l'eau à une température proche de celle de la conservation, c'est-à-dire de l'ordre de 2°C. Cette eau est pompée, filtrée, mise à cette température de consigne et désinfectée avant d'être envoyée sur les produits à refroidir.

A la fin de cette phase de refroidissement, les produits sont conditionnés.

Dans le cas où les produits ne nécessitent pas de choc thermique, comme par exemple de la mâche, ils sont directement traités par de l'eau désinfectée à une température de 2°C comme cela a été décrit ci-dessus. Il n'y a pas dans ce cas de phase de refroidissement particulière avant le conditionnement.

Dans tous les cas, tant lors du traitement en température que lors du traitement à basse température avant le conditionnement ou lors du simple traitement à basse température, l'eau désinfectée circule autour des produits pour entraîner les germes sont détruits pendant la phase de désinfection de l'eau.

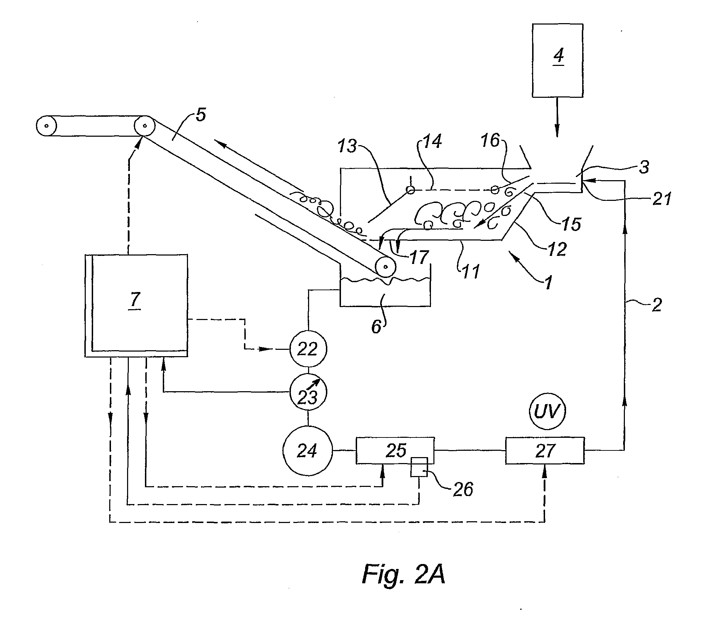

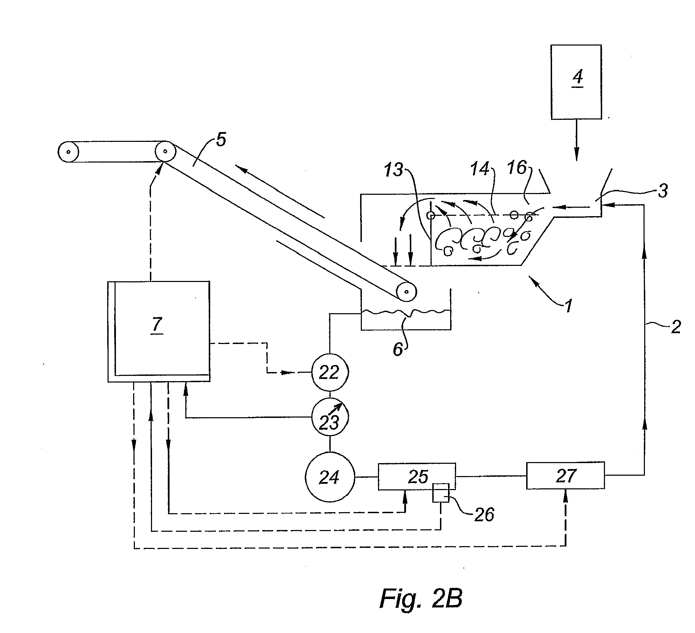

Les figures 2A, 2B montrent la partie d'une installation de traitement de produits en morceaux pour la mise en oeuvre du procédé décrit ci-dessus. Cette installation se compose d'une chambre de traitement 1 alimentée en eau désinfectée par un circuit 2. La chambre de traitement 1 est formée par un caisson avec un fond 11 et des côtés 12. L'un de ces côtés est constitué par une trappe d'évacuation 13, par exemple articulée de manière à pouvoir s'ouvrir et permettre de vider la chambre 1. Lorsque la trappe 13 est fermée la chambre retient l'eau fournie par le circuit 2. La chambre 1 est couverte par une grille 14 située de préférence sous le niveau des côtés 12 de la chambre de manière à former un déversoir.

L'entrée 15 de la chambre 1 est munie d'une trappe d'entrée 16 qui se ferme une fois le lot de produits introduit pour que les produits ne puissent remonter et retourner jusqu'à la sortie. La fermeture de cette trappe d'entrée 16 oblige les produits à rester dans la chambre le temps de séjour prévu par le procédé pour que la durée de contact de l'ordre de 30 secondes avec l'eau désinfectée mise en température permette de traiter efficacement les produits.

L'entrée des produits dans la chambre 1 se fait par un point d'entrée 3 où débouche le circuit d'eau 2 par un injecteur 21 créant un flot d'eau entraînant les produits vers la chambre 1. Les produits sont déversés par lots au point d'entrée 3. La fourniture des produits par lots est schématisée par le rectangle 4.

En sortie, la chambre 1 débouche sur un convoyeur d'évacuation 5. Ce convoyeur d'évacuation 5 installé au-dessus d'un bac tampon 6 pour recueillir l'eau en sortie de la chambre 1. Ce bac 6 alimente le circuit d'eau par sa réserve d'eau pendant que le circuit alimente la chambre de traitement 1 ; ensuite, après l'ouverture de la chambre de traitement, il recueille le volume d'eau déversé avec les produits de la chambre de traitement.

Le circuit d'eau désinfectée 2 comprend une pompe de circulation 22, éventuellement un débitmètre 23 qui permet de contrôler le fonctionnement du circuit, ensuite un filtre 24 et un dispositif de mise en température 25, par exemple un réchauffeur, pour mettre l'eau du circuit à la température de traitement. Le dispositif de mise en température 25 est équipé d'une sonde de température 26. Suivant la nature des produits à traiter, ceux-ci le sont à une eau désinfectée mise à une température relativement basse de l'ordre de 2°C ou à une température élevée de l'ordre de 45°C, s'il faut appliquer un choc thermique aux produis. Ensuite, l'eau passe dans un dispositif de traitement 27 par rayonnement U.V. pour détruire les germes entraînés par l'eau. Le circuit 2 débouche au point d'entrée 3 de la chambre de traitement 1 par l'injecteur 21.

Selon une variante, la désinfection physique de l'eau se fait par de l'ozone que l'on fait barboter dans l'eau. Ce dispositif vient en complément du dispositif de traitement par U.V. 27 ou en remplacement de celui-ci.

Les différents éléments de l'installation selon l'invention sont reliés à un circuit de commande 7 qui gère le fonctionnement de la chambre de traitement 1 en commandant l'ouverture et la fermeture des trappes d'entrée 16 et de sortie 13 suivant le programme de traitement, le fonctionnement du dispositif d'évacuation constitué par un convoyeur 5, le fonctionnement de la pompe 22, le contrôle du débitmètre 23, le fonctionnement du dispositif de traitement 27 par U.V. et le fonctionnement du dispositif de mise en température 25 équipé de la sonde de température 26.

Le traitement des produits est séquentiel, les produits étant introduits (4) dans l'installation de traitement par lots de manière à pouvoir être traités de façon certaine pendant la durée requise pour assurer leur conservation. Cette durée assure un contact suffisant avec l'eau désinfectée pour que celle-ci puisse entraîner le maximum de germes des produits. Bien que le traitement des produits dans la chambre 1 se fasse par lots, le circuit d'eau désinfectée 2 fonctionne de manière continue, l'eau continuant à circuler quelle que soit la position de la trappe d'évacuation 13 de la chambre de traitement 1.

Le bac tampon 6 constitue un réservoir permettant d'absorber les variations de quantité d'eau se trouvant dans la chambre de traitement et dans le circuit 2. La quantité d'eau en circulation est relativement faible. Elle est déterminée principalement par le volume d'eau nécessaire au remplissage de la chambre de traitement 1 et au volume d'eau en circulation permanente dans le circuit. Cette quantité réduite permet de disposer toujours d'eau filtrée et désinfectée par le traitement U.V.

La faible quantité d'eau du circuit 2 réduit également l'inertie thermique permettant une bonne régulation thermique. Cette régulation précise sur la température de consigne est importante pour que le traitement soit efficace et pour qu'il n'abîme pas les produits.

La figure 2A montre en fait deux états distincts de l'installation, à la fois l'évacuation des produits de la chambre 1 par l'ouverture de la trappe 13 et l'introduction d'un nouveau lot de produits. En réalité, ces deux opérations sont nettement distinctes et on simultanées car l'évacuation d'un lot de produits traités se fait par l'ouverture de la trappe d'évacuation 13 alors que la trappe d'entrée 16 est encore fermée et l'introduction (4) d'un nouveau lot de produits se fait seulement après l'évacuation de la chambre de traitement 1 puis la fermeture de la trappe d'évacuation 13 et l'ouverture de la trappe d'entrée 16.

La figure 2B montre l'état de la chambre de traitement 1 pendant la phase de traitement ou de contact entre les produits et l'eau désinfectée. Cette eau circule en continu à travers la chambre de traitement 1. Elle arrive principalement à travers la trappe d'entrée 16 qui est perméable ; puis elle passe dans la chambre pour en ressortir à travers la grille 14 après avoir été au contact des produits agités par le fort débit d'eau ; l'eau se déverse au-dessus du déversoir pour revenir dans le bac tampon 6 et être récupérée par la pompe 22.

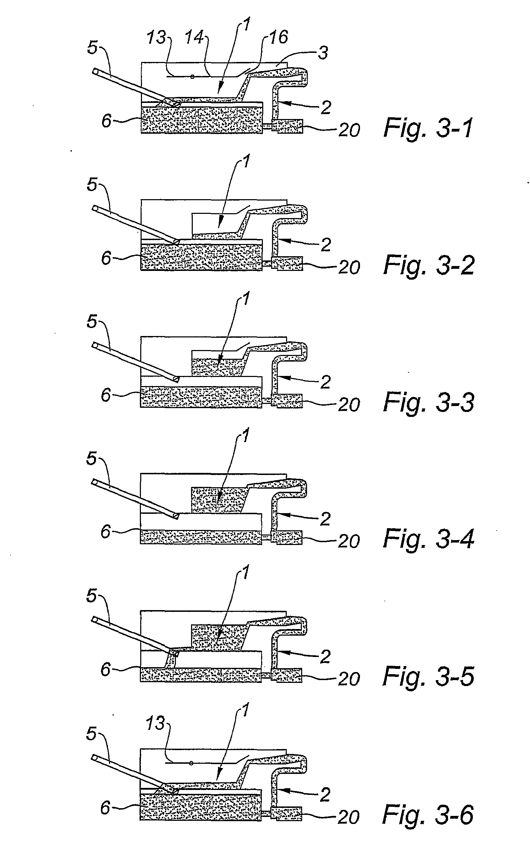

Les figures 3-1 à 3-6 représentent schématiquement les différentes étapes du procédé de traitement d'un lot de produits selon l'invention. Ces figures ont été simplifiées par rapport aux figures 2A, 2B et les différents équipements du circuit de traitement, à savoir la pompe de circulation, le débitmètre, le filtre, le dispositif de traitement physique. et le dispositif de mise en température avec sa sonde de température sont tous regroupés dans un seul bloc 20.

Les moyens d'alimentation en lots de produits ne sont pas non plus représentés. Seul est représenté le convoyeur d'évacuation 5.

En phase initiale (3-1), l'eau circule dans le circuit 2. Elle arrive par l'entrée 3, traverse la chambre 1 pour revenir dans le bac tampon 6 d'où elle est récupérée par la pompe pour ensuite traverser les différents équipements 20 de préparation de l'eau désinfectée et revenir dans la chambre 1.

Partant de cette étape initiale, on commande la fermeture de la trappe d'évacuation 13, la trappe d'entrée 16 étant ouverte (figure 3-2). L'eau de circulation est alors retenue dans la chambre de traitement 1 et le circuit 2 est alimenté par la réserve d'eau du bac tampon 6.

Dans l'étape suivante (figure 3-3), on introduit un lot de produits (morceaux de salade) au point d'entrée 3. Ces produits sont entraînés par l'eau désinfectée qui alimente la chambre de traitement 1.

Lorsque le lot de produits est introduit dans la chambre de traitement 1 (figure 3-4), on ferme la trappe d'entrée 16 pour retenir les produits en flottement dans le bain de la chambre de traitement. La grille 14 couvrant la chambre 1 maintient les produits sous le niveau d'eau.

En effet (figure 3-5), au cours de la suite, l'eau du circuit continuant d'alimenter la chambre 1, elle déborde de sorte que toutes les surfaces des produits sont bien au contact avec l'eau désinfectée.

L'eau déborde et revient dans le bac tampon 6 d'où elle est remise en circulation.

Enfin, la dernière étape (figure 3-5) est celle de l'évacuation des produits après le temps de séjour dans la chambre de traitement 1. Pour cela, on ouvre la trappe d'évacuation 13 et les produits entraînés par le flot d'eau arrivent sur le convoyeur 5 perméable qui les récupère. L'eau continue de passer à travers la chambre 1 et arrive dans le bac tampon 6.

Les différentes opérations décrites ci-dessus sont commandées de préférence automatiquement par le circuit de commande.

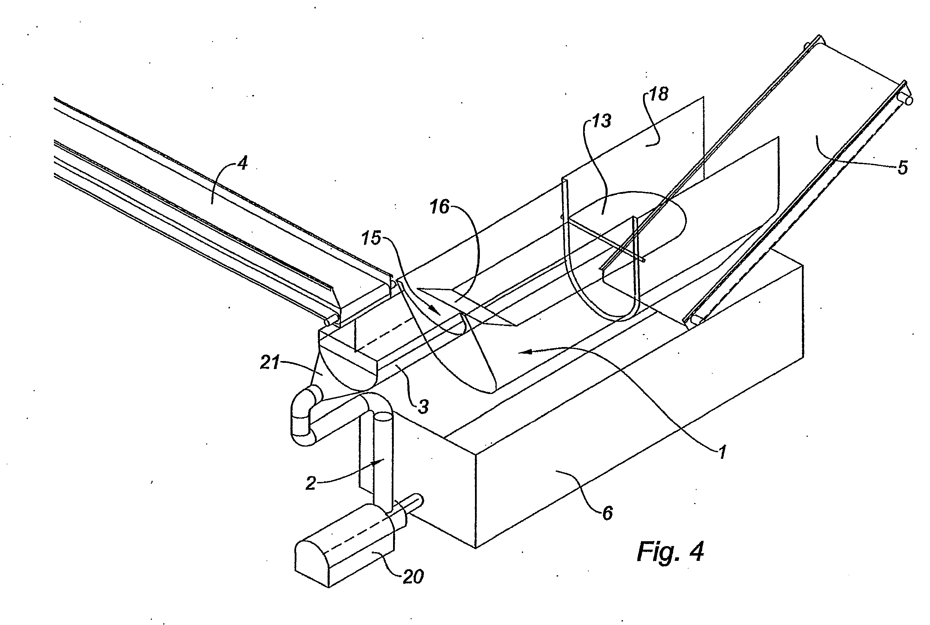

La figure 4 est une vue en perspective d'un mode de réalisation de l'installation décrite schématiquement à l'aide des figures 2A, 2B.

Dans cette installation, les différents équipements tels que la pompe, le débitmètre, le filtre, le dispositif de traitement physique par rayonnement U.V. et le dispositif de mise en température sont regroupés dans un bloc unique 20.

Ce bloc unique 30 est alimenté en eau à partir du bac tampon 6 installé sous la chambre de traitement 1 et sous la partie basse du convoyeur d'évacuation 5.

La chambre de traitement 1 est constituée par un caisson en forme de goulotte à fond courbe. Cette goulotte est équipée du côté de sa sortie par la trappe d'évacuation étanche pivotante, représentée en position ouverte. Cette trappe 13 est manoeuvrée par un actionneur non représenté.

Au-delà de la sortie de la chambre, le caisson 1 se prolonge (18) au-dessus du convoyeur de manière à guider les produits pendant leur évacuation pour les retenir sur le convoyeur 5 qui, perméable, permet à l'eau de couler, de le traverser et de revenir dans le bac tampon 6.

L'entrée de la goulotte formant la chambre de traitement 1 est constituée par un point d'entrée 3 en forme de gouttière débouchant dans le haut de la chambre de traitement 1. L'autre extrémité de cette pièce en forme de gouttière 3 est constituée par l'injecteur 21 relié à la sortie des équipements de traitement 20 formant le circuit d'eau désinfectée 2.

L'arrivée des produits au point d'entrée 3 se fait par un convoyeur à bande 4. Ce convoyeur 4 fonctionne de préférence par intermittence de façon à déverser dans la gouttière du point d'entrée 3, la quantité de produits correspondant à un lot à traiter.

Enfin, le dessus de la chambre de traitement 1 qui se situe nettement en dessous du bord supérieur de la chambre de traitement est fermé par une grille 14 rejoignant la trappe d'évacuation 13.

En amont, la grille 14 laisse une ouverture 15 pour le passage des produits. Cette ouverture 15 est munie de la trappe d'entrée 16, elle aussi de préférence mais non nécessairement en forme de grille, de manière à refermer la chambre de traitement une fois le lot de produits introduit, pour que ceux-ci ne puissent s'échapper par un mouvement de retour vers l'entrée 15 et passer ensuite au-dessus de la grille 14 et suivre l'eau qui se déverse pendant la phase de contact.

L'installation telle que décrite ci-dessus permet de traiter les produits à une température basse, proche de la température de conditionnement et de conservation ou à une température élevée pour créer un choc thermique.

Dans le cas d'un traitement avec choc thermique, comme l'eau désinfectée est à une température de l'ordre de 45°C alors que le conditionnement se fait à une température de l'ordre de 2°C, il faut abaisser la température des produits et, pour cela, il est intéressant de les faire passer en aval de l'installation décrite ci-dessus dans une autre installation identique avec circulation d'eau désinfectée mais qui alors est à une température basse, par exemple 2°C. Cette seconde installation n'est pas représentée.

## Revendications

1. Procédé de traitement de produits végétaux en morceaux tels que des salades ou légumes en vue de leur conditionnement et de leur conservation,
selon lequel
- on lave d'abord les produits pour en éliminer mécaniquement les éléments allogènes solides, tels que sable, petits morceaux de végétaux, pierres, insectes, chenilles ou escargots puis,
- on soumet les produits ainsi lavés à un traitement de conservation,
**caractérisé en ce qu'**
- on soumet les produits à un contact dans un bain (II) d'eau désinfectée que l'on fait circuler entre l'entrée et la sortie du bain,
- avant d'appliquer l'eau désinfectée aux produits, on la filtre (IV), on la met à la température de traitement (V) de l'ordre de 45°C, puis on la soumet à un traitement physique (VI) par un rayonnement ultraviolet pour la désinfecter puis, et on la fait passer sur les produits.

2. Procédé selon la revendication 1,
**caractérisé en ce qu'**
on traite physiquement l'eau (V) en la soumettant à un rayonnement ultraviolet ou à de l'ozone.

3. Procédé selon la revendication 1,
**caractérisé en ce qu'**
on traite les produits par lots et on soumet chaque lot à un séjour de durée déterminée dans le bain pendant que l'on maintient la circulation de l'eau.

4. Procédé selon la revendication 1,
**caractérisé en ce que**
après avoir soumis les produits à un contact dans un bain (II) d'eau désinfectée que l'on fait circuler entre l'entrée et la sortie du bain, à la température de traitement (V) de l'ordre de 45°C,
- on soumet les produits à un bain à une température voisine ou égale à la température finale utilisée pour la conservation des produits, d'environ 2°C,
- on fait circuler cette eau entre l'entrée et la sortie du bain après l'avoir filtré, mise à la température de l'ordre de 2°C puis soumise à un traitement physiquement par rayonnement ultraviolet pour la désinfecter avant de passer sur les produits.

5. Installation de traitement de produits en morceaux pour la mise en oeuvre du procédé selon l'une des revendications 1 à 4,
**caractérisée en ce qu'**
elle comprend
- une chambre de traitement (1) contenant un bain d'eau désinfectée mise en circulation,
- un circuit de préparation (2) de l'eau désinfectée et
- un circuit de commande (7),
A- la chambre de traitement (1) est formée par un caisson, dont l'un des côtés est une trappe d'évacuation (13) et le dessus est occupé par une grille (14),
- l'entrée (15) des produits à traiter se faisant par le haut et la sortie des produits traités se faisant par la trappe d'évacuation (13),
- une arrivée d'eau du circuit (2) passant par l'entrée des produits (3),
B- le circuit de préparation d'eau (2) traversant la chambre de traitement (1) en reliant son entrée (13) à sa sortie, comporte
- une pompe de circulation (22),
- un filtre (24),
- un dispositif de mise en température de l'eau (25),
- un dispositif de traitement physique de désinfection de l'eau (27),
C- le circuit de commande (7) assure le fonctionnement séquentiel du traitement des lots de produits en commandant la fermeture de la trappe de sortie (13) de la chambre (1), le chargement (4) d'un lot, l'ouverture de la chambre (1) et l'évacuation du lot ainsi que la commande du dispositif de mise en température (25) de l'eau en circulation et du dispositif de traitement physique de désinfection de l'eau (27).

6. Installation selon la revendication 5,
**caractérisée en ce que**
le dispositif de traitement physique (27) est un dispositif de désinfection de l'eau par un rayonnement ultraviolet ou un dispositif injectant de l'ozone dans l'eau.

7. Installation selon la revendication 5,
**caractérisée en ce qu'**
elle comporte une trappe d'entrée (16) fermant l'entrée (15) de la chambre (1) après introduction d'un lot pour le retenir dans la chambre pendant la phase de contact.

8. Installation selon la revendication 5,
**caractérisée en ce qu'**
elle comporte un point d'entrée (3) des produits, séparé de la chambre de traitement (1) par la trappe d'entrée (16), ainsi qu'un injecteur d'eau (21)entraînant les produits du point d'entrée (3) vers la chambre de traitement (1) et alimentant celle-ci en eau.

9. Installation selon la revendication 5,
**caractérisée en ce que**
la grille (14) fermant le dessus de la chambre (1) est en dessous du bord du caisson formant la chambre (1) pour que, pendant la phase de contact, la grille (14) soit sous le niveau d'eau lorsque la chambre de traitement est fermée, pour maintenir les produits sous le niveau d'eau pendant la phase.

10. Installation selon la revendication 5,
**caractérisée en ce que**
- le caisson (1) est en forme de goulotte et le point d'entrée (3) des produits est une goulotte débouchant dans le haut du caisson (1) et comportant un injecteur (21) pour l'alimentation en eau désinfectée,
- le caisson se prolonge (18) au-delà de la chambre (1) pour arriver sur un convoyeur (5) perméable constituant la sortie des produits,
- un bac tampon (6) est installé sous la sortie du caisson (1) et récupère l'eau pour la recycler par le circuit (2).

11. Installation selon la revendication 5,
**caractérisée en ce que**
le circuit de commande (7) assure la commande cyclique du traitement d'un lot pour un temps de séjour du lot dans la chambre de traitement (1) qui correspond au moins au passage de la quantité totale de l'eau du circuit (2) dans la chambre de traitement (1).

12. Installation selon la revendication 5,
**caractérisée en ce que**
la pompe de circulation (22) fonctionne en continu.
